# EUROPÄISCHE PATENTANMELDUNG

(11) **EP 2 840 230 A1**
(43) Veröffentlichungstag der Anmeldung: **25.02.2015**
(21) Anmeldenummer: 13181501.1
(22) Anmeldetag: 23.08.2013
(51) Int. Cl.: F01D 5/08

(54) **Rotor für eine thermische Strömungsmaschine**

(71) Anmelder: Siemens Aktiengesellschaft, 80333 München (DE)
(72) Erfinder: Hofsommer, Daniel, 14513 Teltow (DE); Kolk, Karsten, 45479 Mülheim a.d. Ruhr (DE); Schröder, Peter, 45307 Essen (DE)

(57) **Zusammenfassung**

Die Erfindung betrifft einen Rotor (10) für eine thermische Strömungsmaschine, insbesondere eine Gasturbine, der ausgestaltet ist, in seinem Inneren ein Medium, beispielsweise Verdichterluft, zu führen. Um dieses Medium strömungsverlustarm im Inneren zu führen und um gleichzeitig einen vergleichsweisen einfach sowie kostengünstig herstellbaren Rotor anzugeben, ist vorgesehen, dass zwischen den beiden Rotorscheiben (34, 42) eine Vielzahl von entlang des Umfangs verteilten Rohrleitungen (36) zur Einleitung eines Mediums in das Rotorinnere zur vorgesehen sind, die sich jeweils radial von außen nach innen erstrecken und zwischen den Nabenbereichen (28) der beiden Rotorscheiben (34, 42) befestigt sind.

## Beschreibung

Die Erfindung betrifft einen Rotor für eine thermische Strömungsmaschine, welcher im Inneren zur Führung eines Mediums ausgebildet ist und der zumindest ein Paar benachbarter Rotorscheiben aufweist, wobei jede Rotorscheibe einen um ihre Rotationsachse endlos umlaufenden Scheibensteg aufweist, der an seinem - bezogen auf die Rotationsachse - radial inneren Ende einen gegenüber dem Scheibensteg axial verbreiterten Nabenbereich mit einer zur Rotationsachse konzentrischen zentralen Öffnung und der an seinem radial äußeren Ende einen axial verbreiterten Kranzbereich zur Anlage an der benachbarten Rotorscheibe und zur Aufnahme von Laufschaufeln aufweist.

Rotoren für thermische Strömungsmaschinen wie Axialverdichter und Gasturbinen sind aus dem umfangreich vorhandenen Stand der Technik in unterschiedlichen Bauformen bekannt. Beispielsweise sind für Gasturbinen geschweißte Rotoren bekannt, bei denen unterschiedlich breite Trommeln miteinander zu einem monolithischen Rotor verschweißt sind. Andererseits ist es bekannt, mehrere scheibenförmige Elemente - bekannt auch als Rotorscheiben - zu stapeln und diese mit Hilfe einem oder mehrerer Zuganker zu einem festen Gebilde zu verspannen. Selbst Kombinationen dieser Bauformen sind bekannt. An allen Rotoren sind außen Laufschaufel montiert, die bei Gasturbinen beispielsweise entweder dem Verdichter oder der Turbineneinheit zuzuordnen sind. Unabhängig von der Bauform kann über im Rotormantel angeordnete Löcher ein Medium in das Innere der Rotoren eingeleitet werden, um dieses Medium von der Einspeise-Position zu einer zweiten axialen Position zu führen, wo das Medium dem Rotor wieder entnommen wird. Diese Methode wird insbesondere bei Gasturbinen eingesetzt, um Kühlluft dem Hauptströmungspfad des Verdichters einer Gasturbine rotorseitig zu entnehmen und zur Turbineneinheit zu führen, wo sie dann wieder aus dem Rotorinneren herausgeführt zu Kühlluftzwecken und/oder Sperrluftzwecken verwendet werden kann.

Um eine aerodynamisch effiziente Entnahme von Luft aus dem Verdichter einer Gasturbine und eine effiziente Führung der Luft im Rotorinneren zu ermöglichen, sind unterschiedliche Konstruktionen bekannt.

Beispielsweise ist es aus der DE 196 17 539 A1 bekannt, die wegen der Drehung des Rotors mit Drall in den Rotorhohlraum einströmende Luft über sich radial erstreckende Rippen zur Rotormitte zu führen. Die Führung bewirkt, dass die Umfangsgeschwindigkeit der aus den Bohrungen austretenden Luft sich mit kleiner werdendem Radius verringert, was eine unzulässig große Drallbildung verhindert. Aus diesem Grunde werden die Rippen auch als "Deswirler" bezeichnet, was aus dem Englischen abgeleitet ist.

Aufgabe der vorliegenden Erfindung ist die Bereitstellung einer alternativen Lösung, bei der einerseits die Druck- und Strömungsverluste im Rotorinneren weiter reduziert sind und die andererseits eine einfach herzustellende und somit kostengünstige Lösung ist.

Die auf die Erfindung gerichtete Aufgabe wird mit einem Rotor gemäß den Merkmalen des Anspruchs 1 gelöst. Vorteilhafte Ausgestaltungen sind in den abhängigen Ansprüchen angegeben, deren Merkmale gemäß den Rückverweisen miteinander kombiniert werden können.

Die Erfinder haben erkannt, dass im Stand der Technik Strömungsverluste im Bereich der radialen Rippen auftreten können, da diese in Umfangsrichtung eher vergleichsweise weit auseinander stehen und somit an dieser Stelle größere Strömungsquerschnitte für das der Strömungsmaschine entnommene Medium vorhanden sind. Dies gilt umso mehr, da die Strömungspassagen zwischen den bekannten Rippen auch eine vergleichsweise große axiale Ausdehnung aufweisen. Um diesen Nachteil auszuräumen, wird vorgeschlagen, den Strömungsquerschnitt der Strömungspassagen, mit denen die Luft möglichst nahe zum Rotorzentrum geführt werden soll, über die größtmögliche Länge zu begrenzen.

Deswegen sind Rohrleitungen als Mittel zum Führen des Mediums vorgesehen. Mithilfe der Rohrleitung ist es möglich, das einem Strömungspfad der thermischen Strömungsmaschine zu entnehmende Medium rotorseitig auf einem vergleichsweise großen Durchmesser abzugreifen und dieses in das Innere des Rotors verlustarm zu führen. Die Führung mithilfe der Rohrleitungen endet auf einem vergleichsweise kleinen Radius, wobei mit Hilfe der Rohrleitungen der Strömungsquerschnitt über die gesamte Führungslänge konstant gehalten werden kann, was den Druckverlust gering hält. Der kleine Radius entspricht vorzugsweise demjenigen Radius, an dem das entnommene Medium dann entlang der Längsachse des Rotors geführt werden kann. Insbesondere die Rotoren in Scheibenbauweise eignen sich dafür, da bisher zwischen den Nabenbereichen von Rotorscheiben ein axialer Freiraum vorhanden war, in dem nun diese Rohrleitungen enden können. Erfindungsgemäß ist nun vorgesehen, dass die Rohrleitungen an den Nabenbereichen unmittelbar benachbarter Rotorscheiben befestigt werden, wodurch trotz Verwendung der Rohrleitungen kein zusätzlicher axialer Bauraum erforderlich ist.

Von besonderem Vorteil ist die prinzipiell radial innen vorgesehene Befestigung der Rohrleitungen, so dass im Betrieb der Strömungsmaschine die Rohrleitungen sich unter Fliehkraft und gegebenenfalls unter Wärmeeinfluss zu ihrem äußeren Ende ausdehnen können. Insofern werden die Rohrleitungen hauptsächlich nur auf Zug belastet, insbesondere unter Fliehkrafteinwirkung. Dies führt zu einer langlebigen Ausgestaltung eines gattungsgemäßen Rotors.

Gemäß einer ersten vorteilhaften Weiterbildung weisen zur Befestigung der Rohrleitungen beide Nabenbereiche seitlich jeweils eine Umfangsnut auf, die der jeweils anderen gegenüberliegt, wobei in den beiden Umfangsnuten ein zylindrisches Halterohr endet, an dem die Rohrleitungen befestigt sind. Derartige Umfangsnuten sind bereits aus dem Stand der Technik bekannt und dienen zumeist zur Aufnahme eines Kragens von Dämpfungskegeln, die auf einem zentralen Zuganker sitzen. Mithin beeinträchtigt das Vorhandensein der Umfangsnuten die Lebensdauer der Rotorscheiben nicht. Weiter muss das Halterohr nicht als selbsttragende Konstruktion ausgestaltet sein, da es sich an den Seitenwänden der Umfangsnuten bei Fliehkrafteinwirkung abstützen kann. Weiter sind bei dieser vorteilhaften Weiterbildung die Rohrleitungen entlang des Umfangs des Halterohres verteilt und daran befestigt. Hierdurch wird eine vergleichsweise einfache sowie preiswerte Konstruktion zur Befestigung der Rohre angegeben, welche die Führung des entnommenen Mediums nicht beeinflusst.

Zur Befestigung der Rohrleitung an dem Halterohr bestehen vorzugsweise mehrere Möglichkeiten. Einerseits ist es möglich, dass das Halterohr für jede Rohrleitung eine seitlich offene Ausklinkung in der Größe des Rohrquerschnitts aufweist, in welche die betreffende Rohrleitung mit einer daran vorgesehenen umlaufenden Ringnut eingesetzt ist. Dabei ist die Ausklinkung weitestgehend zur Ringnut korrespondierend. In Axialrichtung (des Rotors) betrachtet liegt dann ein Formschluss nach Art einer Nut-Feder-Verbindung vor, der dem nach außen Streben der Rohrleitungen unter Fliehkraftwirkung widersteht. Alternativ könnte das Halterohr auch aus zwei aneinander liegenden Ringen geformt sein, wobei für jede Rohrleitung zwei einander gegenüberliegende halbkreisförmige Ausklinkungen in den Ringen vorgesehen sind. In beiden Fällen kann die Ringnut der Rohrleitung, die einen Formschluss mit den Ausklinkungen bildet, durch zwei am Rohr mantelseitig angeordnete Ringe gebildet sein, die unter Abstand angeordnet sind. Der Abstand dieser beiden Ringe an der Rohrleitung entspricht dann in etwa der Wandstärke des Halterohrs. Damit lässt sich ein spielbehafteter Sitz weitestgehend vermeiden. Alle vorgenannten Variationen sind vergleichsweise einfach herstellbar und stellen eine vergleichsweise einfache Konstruktion dar, die besonders langlebig ist.

Alternativ zur Nut-Feder-Verbindung von Halterohr und Rohrleitung können die Rohrleitungen auch in das Halterohr eingeschraubt sein. In diesem Fall wäre die Verschraubung gegen ein Lösen zu sichern, was bspw. mithilfe einer Punktschweißung oder durch Löten gewährleistet werden kann.

Bei Rotoren in Scheibenbauweise, deren Scheiben also über eine Verzahnung aneinander liegen, um so die auf die Scheibe einwirkenden Drehmomente an die Nachbarscheibe zu übertragen, kann vorgesehen sein, dass die Verzahnung an derjenigen Umfangsposition, an der eine Rohrleitung das Medium von außen nach innen führen soll, unterbrochen ist. Die Unterbrechung kann so ausgeführt sein, dass sie hälftig in aneinander liegenden Flanken von Zähnen benachbarter Rotorscheiben angeordnet ist. Hiermit lässt sich eine einfache Konstruktion angeben, ohne die Verzahnung wesentlich zu beeinträchtigen.

Eine alternative Befestigung zu den Halterohren kann angegeben werden, wenn anstelle dessen die Rotorleitungen radial innen mittels eines vergleichsweise - bezogen auf das Halterohr - dickwandigen Innenrings miteinander fest verbunden sind. In diesem Fall ist der sogenannte Innenring vergleichsweise massiv ausgeführt, wobei dieser für jede Rohrleitung ein gestuftes Durchgangsloch aufweist, in welche die betreffende Rohrleitung eingesetzt werden kann. Zudem sind die Rohrleitungen mit dem Innenring unlösbar verschweißt. Vorzugsweise ist dann ebenso ein Außenring vorgesehen, der im Kragenbereich zwischen den beiden Rotorscheiben angesiedelt ist und an dem die Rohrleitungen ebenso befestigt sind. Am Außenring kann die Verzahnung zur Übertragung der Drehmomente vorgesehen sein. Mit Hilfe dieser vorgenannten Lösung kann ein geschweißtes, selbsttragendes Kühlrad bereitgestellt werden, welches zwischen zwei Scheiben angeordnet wird. Im Gegensatz zu den Scheiben sind an dem Kühlrad außen keine Schaufeln vorgesehen.

Das separate Kühlrad hat den Vorteil, dass bestehende Rotorscheiben weitestgehend unverändert weiter benutzt werden können. Je nach Auslegung und Verformung des Kühlrads sind die Rohrleitungen entweder am Außenring und/oder am Innenring verschweißt, um die thermische Dehnung der Rohre zu kompensieren. Weiter bevorzugt sind zur Vermeidung, dass das eingeleitete Medium in einen Rotorscheibenzwischenraum einströmt, Dichtringe vorgesehen, die einerseits in im Nabenreich angeordnete Umfangsnuten und andererseits in im Kühlrad angeordnete Umfangsnuten eingelegt sind.

Die Erfindung betrifft somit insgesamt einen Rotor für eine thermische Strömungsmaschine, insbesondere eine Gasturbine, der ausgestaltet ist, in seinem Inneren ein Medium, beispielsweise Verdichterluft, zu führen. Um dieses Medium strömungsverlustarm im Inneren zu führen und um gleichzeitig einen vergleichsweisen einfach sowie kostengünstig herstellbaren Rotor anzugeben, ist vorgesehen, dass zwischen den beiden Rotorscheiben eine Vielzahl von entlang des Umfangs verteilten Rohrleitungen zur Einleitung eines Mediums in das Rotorinnere zur vorgesehen sind, die sich jeweils radial von außen nach innen erstrecken und zwischen den Nabenbereichen der beiden Rotorscheiben befestigt sind.

Weitere Vorteile und Merkmale der Erfindung werden anhand eines einzigen Ausführungsbeispieles erläutert.

Es zeigen:
- Figur 1: einen Längsschnitt durch einen Läufer einer Strömungsmaschine;
- Figur 2: einen Ausschnitt durch den Längsschnitt eines erfindungsgemäßen Rotors einer Strömungsmaschine mit einem zwischen zwei Rotorscheiben angeordneten Rohrleitungen;
- Figur 3: die Schnittansicht gemäß B-B aus Figur 2;
- Figur 4: die Schnittansicht gemäß C-C aus Figur 2; und
- Figur 5: ein alternatives Ausführungsbeispiel mit einem Kühlluftrad zwischen zwei Rotorscheiben.

In allen Figuren sind identische Merkmale mit den gleichen Bezugszeichen versehen.

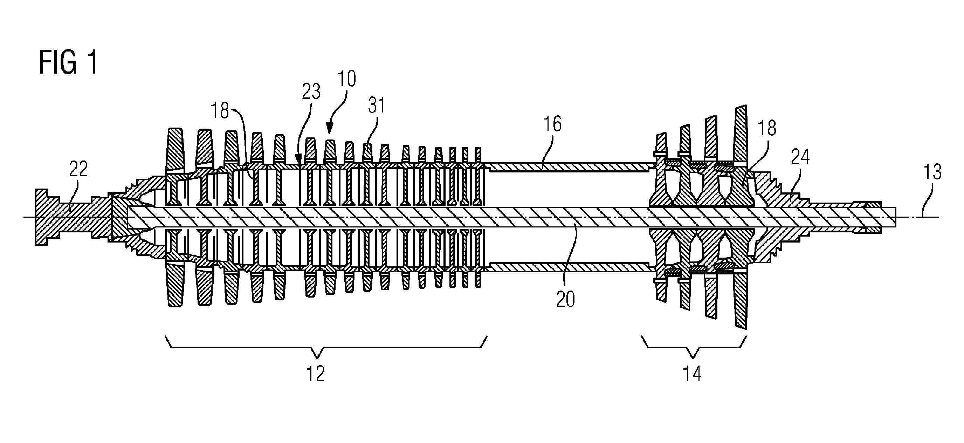

Figur 1 zeigt den prinzipiellen schematischen Aufbau eines Rotors 10 einer thermischen Strömungsmaschine, die im montierten zustand um ihre Rotationsachse 13 drehbar gelagert ist. Im gezeigten Ausführungsbeispiel handelt es sich um den Rotor 10 einer stationären Gasturbine. Der Rotor 10 könnte auch in einer Flugzeug-Gasturbine Verwendung finden. Aufgrund des Einsatzes in einer Gasturbine umfasst der Rotor 10 einen Verdichterabschnitt 12 und einen Turbinenabschnitt 14. Zwischen den beiden Abschnitten 12, 14 ist ein Rohr 16 vorgesehen. Sowohl der Verdichterabschnitt 12 als auch der Turbinenabschnitt 14 sind in Scheibenbauart ausgeführt. Der Verdichterabschnitt 12 umfasst im gezeigten Ausführungsbeispiel sechzehn Rotorscheiben 18 und der Turbinenabschnitt 14 vier Rotorscheiben 18. Durch alle Rotorscheiben 18 und das Rohr 16 erstreckt sich ein Zuganker 20, an dessen beiden Enden eine sogenannte vordere Hohlwelle 22 und eine sogenannte hintere Hohlwelle 24 aufgeschraubt sind. Die beiden Hohlwellen 22, 24 verspannen sämtliche Rotorscheiben 18 und das Rohr 16 miteinander, so dass Relativbewegungen in Umfangsrichtung weitestgehend vermieden werden. Im Detail wird dieses durch an den Kontaktflächen 23 angeordnete Hirth-Verzahnungen. Diese sind jedoch nicht weiter dargestellt.

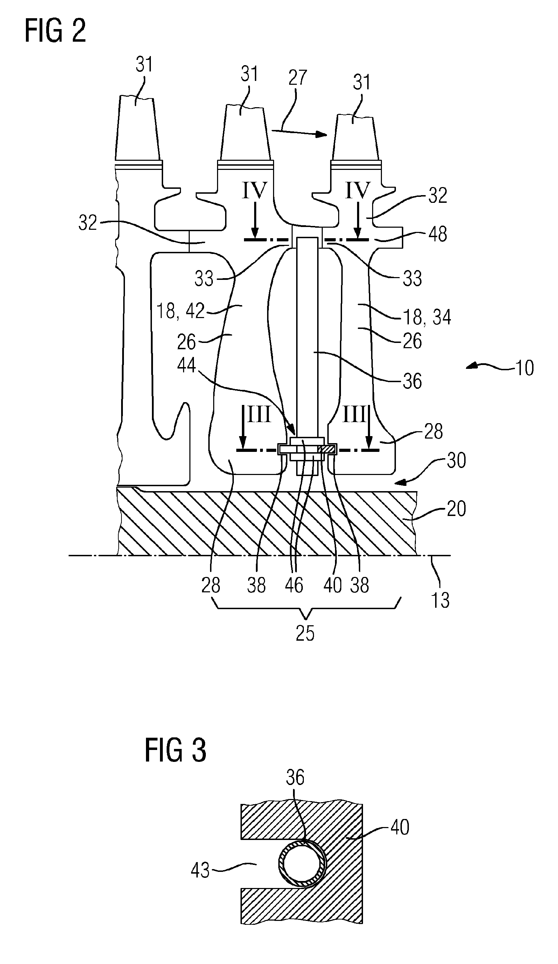

Die erfindungsgemäßen Merkmale sind in Figur 1 nicht dargestellt. Hierzu wird auf Figur 2 verwiesen, die einen Ausschnitt von zwei beliebigen, jedoch ein Scheibenpaar 25 bildende Rotorscheiben 18 des Verdichterabschnitts 12 aus Figur 1 vergrößert darstellen. Rotorscheiben im Sinne dieser Anmeldung sind Scheiben, die an ihrem Außenumfang Laufschaufeln 31 tragen.

Außerhalb des Rotors 10 strömt im Betriebszustand in einem nicht weiter dargestellten Hauptströmungspfad als Medium Luft in Pfeilrichtung 27, die vom Verdichter währenddessen komprimiert wird.

Jede Rotorscheibe 18 weist einen sich um die Rotationsachse 13 endlos umlaufenden Scheibensteg 26 auf. Der Scheibensteg 26 weist an seinem radial inneren Ende einen Nabenbereich 28 mit einer zur Rotationsachse 13 konzentrischen zentralen Öffnung 30 und an seinem radial äußeren Ende einen Kranzbereich 32 auf. Der Kranzbereich dient zur Befestigung von Laufschaufeln 31 und umfasst beidseitig angeordnete Kragen 33, an denen die benachbarten Rotorscheiben 18 aneinander liegen. Die in Figur 2 rechts dargestellte Rotorscheibe 18 wird nachfolgend als erste Rotorscheibe 34 bezeichnet, die links dargestellte als zweite Rotorscheibe 42.

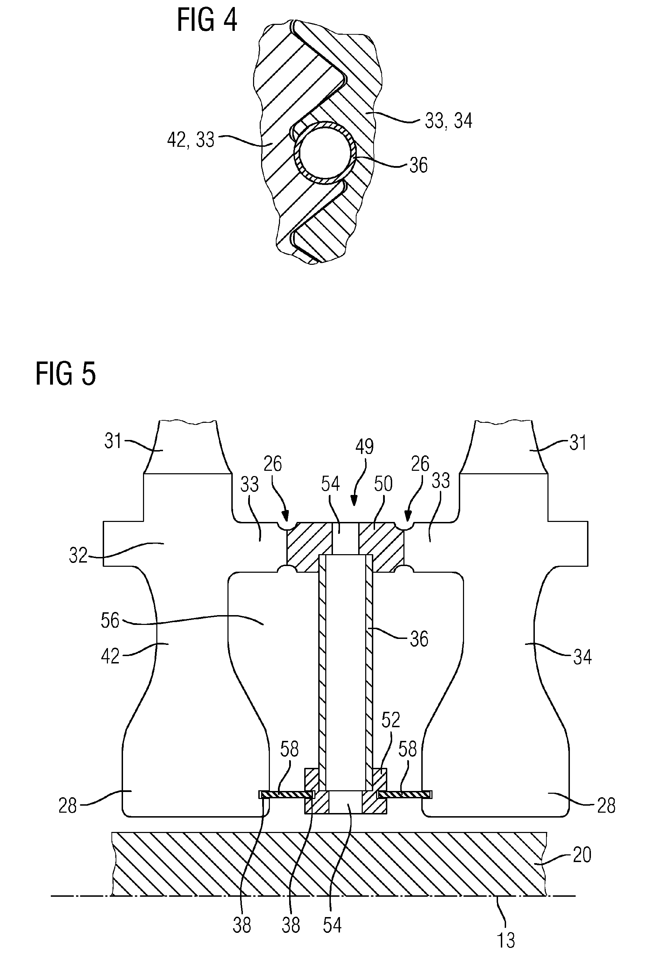

Die beiden Rotorscheiben 34, 42 weisen in ihren Nabenbereichen seitlich jeweils eine Ringnut 38 auf, in denen ein vergleichsweise kurzes Rohr als Halterohr 40 angeordnet ist. Ein Teil des Rohres 40 ist in Figur 3 gemäß der in Figur 2 dargestellten Schnittlinie B-B dargestellt. Für jede Rohrleitung 36 weist das Halterohr 40 eine dementsprechend große Ausklinkung 43 auf, wodurch die Rohrleitung 36 von der Seite her in die Ausklinkung 43 eingesetzt werden kann. Die Rohrleitungen 36 weisen jeweils eine Ringnut 44 auf, die von zwei unter Abstand angeordneten Ringen 46 gebildet ist. Auf einem größeren Radius liegend - bezogen auf die Rotationsachse 13 - sind an den Seitenflächen der einander gegenüberliegenden Kragen 33 Zähne einer Hirth-Verzahnung vorgesehen, um die Drehmomente von einer Rotorscheibe auf die andere Rotorscheibe zu übertragen. An denjenigen Umfangspositionen, an denen Rohrleitungen 36 vorgesehen sind, sind jedoch die Verzahnungen unterbrochen, was in Figur 4 dargestellt ist. Figur 4 zeigt den Schnitt gemäß der Schnittlinie C-C aus Figur 2.

Im gezeigten ersten Ausführungsbeispiel sind somit die Rohrleitungen 36 nach Art einer Nut-Feder-Verbindung im Halterohr 40 befestigt. Gemäß einem nicht gezeigten Ausführungsbeispiel kann selbstverständlich das Halterohr auch durch zwei axial benachbarte Ringe gebildet sein, bei denen für jede Rohrleitung jeweils einander gegenüberliegende halbkreisförmige Ausklinkungen vorgesehen sein können. Zur Montage werden dann in einen der beiden Ringe die Rohrleitungen eingelegt, wonach der andere der beiden Ringe auf die überstehenden Rohrhälften aufgesteckt wird. Anschließend werden die beiden Ringe miteinander verschweißt, umso eine gut handbarbare Baugruppe zu erhalten. Ein drittes Ausführungsbeispiel unterscheidet sich vom ersten Ausführungsbeispiel darin, dass anstelle der Nut-Feder-Verbindung eine Verschraubung der Rohrleitung im Halterohr 40 vorgesehen ist.

Figur 5 zeigt ein drittes Ausführungsbeispiel des erfindungsgemäßen Rotors 10, bei dem zwischen zwei Rotorscheiben 34, 42 ein geschweißtes selbsttragendes Kühlrad 49 mit Hirth-Verzahnung angeordnet ist. Das Kühlrad 49 umfasst einen Außenring 50 und einen Innenring 52, zwischen denen sich die Rohrleitungen 36 sternförmig erstrecken. Außenring 50 und Innenring 52 weisen für jede Rohrleitung 36 jeweils ein gestuftes Durchgangsloch 54 auf, in dessen größerem Durchmesser die Rohrleitung 36 eingesetzt ist. Um ein Einströmen von in den Rotor 10 strömenden Medium in den Scheibenzwischenraum 56 zu vermeiden, können zwischen Innenring 52 und den Nabenbereichen 28 der Rotorscheiben 34, 42 sogenannte Dichtringe 58 vorgesehen sein. Die Dichtringe 58 greifen in einander gegenüberliegende Ringnuten 38, die an den Seitenflächen des Innenrings 52 bzw. an den Nabenbereichen 28 angeordnet sind.

Im gezeigten Ausführungsbeispiel gemäß Figur 5 sind die Rohre 36 sowohl mit dem Außenring 50 als auch mit dem Innenring 52 verschweißt, was aber nicht zwingend beidendseitig sein muss.

## Patentansprüche

1. Rotor (10) für eine stationäre thermische Strömungsmaschine, welcher im Inneren zur Führung eines Mediums ausgebildet ist,
mit zumindest einem Paar (25) benachbarter Rotorscheiben (18),
wobei jede Rotorscheibe (18) einen um ihre Rotationsachse endlos umlaufenden Scheibensteg (26) aufweist, der an seinem - bezogen auf die Rotationsachse (13) - radial inneren Ende einen gegenüber dem Scheibensteg (26) axial verbreiterten Nabenbereich (28) mit einer zur Rotationsachse (13) konzentrischen zentralen Öffnung (30) und der an seinem radial äußeren Ende einen axial verbreiterten Kranzbereich (32) zur Anlage an der benachbarten Rotorscheibe (18, 34, 42) und zur Aufnahme von Laufschaufeln (31) aufweist, **dadurch gekennzeichnet, dass**
zwischen den beiden Rotorscheiben (34, 42) eine Vielzahl von entlang des Umfangs verteilten Rohrleitungen (36) zur Einleitung eines Mediums in das Rotorinnere vorgesehen sind, die sich jeweils radial von außen nach innen erstrecken und zwischen den Nabenbereichen (28) der beiden Rotorscheiben (34, 42) befestigt sind.

2. Rotor (10) nach Anspruch 1,
bei dem zur Befestigung beide Nabenbereiche (28) jeweils eine Umfangsnut (38) aufweisen, die der jeweils anderen gegenüberliegt, wobei in den beiden Umfangsnuten (38) ein zylindrisches Halterohr (40) sitzt, an dem die Rohrleitungen (36) befestigt sind.

3. Rotor (10) nach Anspruch 2,
bei dem das Halterohr (40) für jede Rohrleitung (36) eine Ausklinkung (42) aufweist, in welcher die betreffende Rohrleitung (36) mit einer daran vorgesehenen umlaufenden Ringnut (44) formschlüssig eingesetzt ist.

4. Rotor (10) nach Anspruch 2,
bei dem das Halterohr (40) zwei aneinander liegende Ringe umfasst, wobei für jede Rohrleitung (36) zwei einander gegenüberliegende halbkreisförmige Ausklinkungen (42) in den Ringen vorgesehen sind.

5. Rotor (10) nach Anspruch 3 oder 4,
bei dem die Ringnut (44) zwischen zwei mantelseitig angeordneten Ringen (46) gebildet ist.

6. Rotor (10) nach Anspruch 2,
bei dem die Rohrleitungen (36) in das Halterohr (40) eingeschraubt sind.

7. Rotor (10) nach Anspruch 1,
bei dem die Rohrleitungen (36) radial innen mittels eines Innenrings (52) und/oder mittels eines Außenrings (54) miteinander fest verbunden sind.

8. Rotor (10) nach Anspruch 8,
bei dem der Innenring (52) zu den beiden Nabenbereichen (28) der Rotorscheiben (34, 42) beabstandet ist und die so geformten Axialspalte jeweils mittels eines Dichtrings (58) abgedichtet sind, welche jeweils in Umfangsnuten (38) eingreifen, die an den Nabenbereichen (28) und dem Innenring (52) seitlich angeordnet sind.

9. Rotor (10) nach Anspruch 7 oder 8,
bei dem im Kragenbereich (32) zwischen den beiden Rotorscheiben (34, 42) der Außenring (54) vorgesehen ist, an dem die Rohrleitungen (36) befestigt sind.
